# FASCICULE DE BREVET EUROPEEN

(11) **EP 3 867 152 B1**
(45) Date de publication et mention de la délivrance du brevet: **25.12.2024**
(21) Numéro de dépôt: 19808629.0
(22) Date de dépôt: 16.10.2019
(51) Int. Cl.: B64D 27/02

(54) **ENGIN COMPRENANT UN GROUPE MOTOPROPULSEUR HYBRIDE ET PROCÉDÉ DE PILOTAGE CORRESPONDANT**
MOTOR MIT HYBRIDANTRIEB UND ENTSPRECHENDES STEUERUNGSVERFAHREN
ENGINE WITH HYBRID POWERTRAIN AND CORRESPONDING CONTROL METHOD

(30) Priorité: 17.10.2018 FR 1801092
(43) Date de publication de la demande: 25.08.2021
(73) Titulaire: Voltaero, 17600 Medis (FR)
(72) Inventeur: BOTTI, Jean, Fort Lauderdale, Florida 33308 (US); ESTEYNE, Didier, 17600 SAUJON (FR)
(74) Mandataire: Ipsilon
(86) Numéro de dépôt international: PCT/FR2019/052456
(87) Numéro de publication internationale: WO 2020/079369

(56) Documents cités:
- EP-A1- 2 688 184
- EP-A1- 2 964 524
- EP-B1- 2 964 524
- DE-A1- 102012 021 340
- DE-A1- 102014 224 637
- US-A1- 2010 219 779

## Description

### DOMAINE DE L'INVENTION

La présente invention concerne de manière générale un engin, tel qu'un aéronef, équipé d'un groupe motopropulseur comprenant un moteur électrique et un moteur thermique.

### ART ANTERIEUR

On connaît de l'état de la technique des engins tels que des aéronefs qui comprennent un groupe motopropulseur avec la configuration suivante. Le groupe motopropulseur comprend une hélice, un moteur électrique permettant d'entraîner l'hélice, une batterie permettant d'alimenter le moteur électrique, et un moteur thermique associé à un alternateur permettant de recharger la batterie.

Cependant, en cas de défaut sur la chaîne de commande électrique qui comprend la batterie et le moteur électrique, l'hélice ne peut plus être entraînée.

Une telle configuration du groupe motopropulseur pose ainsi des problèmes de sécurité importants, notamment au décollage.

On connaît aussi des documents DE102012021340, EP2964524, et US2010/219779 des groupes motopropulseurs dont les configurations posent cependant des problèmes d'encombrement et/ou de poids.

La présente invention a pour but de proposer un nouvel engin permettant de pallier tout ou partie des problèmes exposés ci-dessus.

### RESUME DE L'INVENTION

Il est proposé un engin, tel qu'un aéronef, muni d'un groupe motopropulseur conforme à la revendication 1.

Une telle conception de l'engin avec le rotor qui est monté coaxial et rotatif autour l'axe de l'arbre intermédiaire, qui fait partie de la chaîne de transmission de mouvement, permet de gagner en compacité et en poids (en limitant le nombre de pièces), ce qui permet d'augmenter le ratio de puissance fournie (KW) / poids (Kg). En effet, l'arbre intermédiaire s'étend à l'intérieur du rotor et ledit arbre intermédiaire, qui fait partie de la ligne de transmission mécanique, est coaxial avec l'axe de rotation du rotor. Selon un mode de réalisation, ledit arbre intermédiaire est aussi coaxial avec l'arbre d'hélice et un système d'embrayage permet de coupler/découpler l'arbre intermédiaire et l'arbre d'hélice.

Selon un mode de réalisation, chaque arbre qui forme partie de la chaîne de transmission de mouvement à l'hélice est coaxial avec l'arbre d'hélice.

Selon un mode de réalisation, le stator se présente sous la forme d'un corps creux et muni d'un bobinage, et le rotor est muni d'aimants.

Selon un mode de réalisation, le groupe motopropulseur comprend aussi un système de transmission mécanique de type train épicycloïdal, qui comprend:
- un arbre intérieur, appelé soleil, correspondant à une partie de l'arbre intermédiaire et une couronne portée par l'intérieur du corps creux du rotor;
- un satellite interposé entre le soleil et la couronne, et un porte-satellite dont l'extrémité opposée au satellite est solidaire en rotation d'une partie du deuxième embrayage, le deuxième embrayage comprenant une autre partie solidaire en rotation de l'arbre d'hélice.

Selon un mode de réalisation, le système d'embrayages comprend un quatrième embrayage configuré pour, à l'état fermé, transmettre la rotation du moteur thermique au moteur électrique pour le faire fonctionner en génératrice.

Les différents arbres qui participent à la chaîne de transmission de mouvement entre, d'une part, le moteur thermique et/ou le moteur électrique et, d'autre part, l'arbre d'hélice, sont coaxiaux. Autrement dit, chaque arbre qui forme une partie de la chaîne de transmission de mouvement à l'arbre d'hélice est coaxial avec l'arbre d'hélice.

Selon un mode de réalisation, le stator se présente sous la forme d'un corps creux muni d'un bobinage et/ou d'aimants, de préférence sur sa face interne et le rotor est muni d'aimants et/ou d'un bobinage de préférence sur sa face périphérique externe.

Selon un exemple, il est proposé un engin tel qu'un aéronef, muni d'un groupe motopropulseur qui comprend :
- une motorisation thermique comprenant un moteur thermique et un arbre, appelé arbre de sortie du moteur thermique, entrainable en rotation par le moteur thermique ;
- une motorisation électrique comprenant un moteur électrique ;
- un système d'alimentation électrique comprenant une batterie permettant d'alimenter le moteur électrique ;
- un système de propulsion à hélice comprenant une hélice et un arbre, appelé arbre d'hélice, auquel est couplé l'hélice ;
dans lequel
le groupe motopropulseur comprend aussi un système d'embrayages configuré pour permettre, sélectivement :
- d'entraîner l'hélice à l'aide du moteur thermique sans transmission de rotation du moteur électrique à l'hélice ;
- d'entraîner l'hélice à l'aide du moteur électrique sans transmission de rotation du moteur thermique à l'hélice ;
- d'entraîner l'hélice par transmission combinée du mouvement de rotation du moteur thermique à l'hélice, et du mouvement de rotation du moteur électrique à l'hélice.

Le système de propulsion à hélice de l'engin peut ainsi être entraîné de façon indépendante ou simultanée, par la motorisation électrique et/ou par la motorisation thermique. La sécurité, notamment au décollage lorsque l'engin est un aéronef, est ainsi améliorée puisque, en cas de problème sur la chaîne de transmission électrique, la motorisation thermique peut prendre le relais pour entraîner l'hélice.

Par ailleurs, la possibilité d'utiliser un mode de propulsion électrique seul, permet à un aéronef de décoller et d'atterrir sur des terrains urbains, ou périurbains avec une production sonore réduite.

Le groupe motopropulseur comprenant un arbre, appelé arbre intermédiaire, solidaire de ou couplable en rotation à l'arbre d'hélice, le système d'embrayages comprend :
- un premier embrayage configuré pour, à l'état fermé, transmettre la rotation du moteur thermique à l'arbre intermédiaire, et
- un deuxième embrayage et/ou un troisième embrayage configuré pour, à l'état fermé, transmettre la rotation du moteur électrique à l'arbre d'hélice.

Le deuxième embrayage permet, à l'état fermé, de transmettre la rotation de l'arbre intermédiaire à l'arbre d'hélice

Selon un mode de réalisation, le système d'embrayages comprend un quatrième embrayage configuré pour, à l'état fermé, transmettre la rotation du moteur thermique au moteur électrique pour le faire fonctionner en génératrice.

Selon un mode de réalisation, le moteur électrique comprend :
- un stator se présentant sous la forme d'un corps creux et muni d'un bobinage sur sa face interne ;
- un rotor se présentant sous la forme d'un corps rotatif autour de l'arbre intermédiaire et à l'intérieur du stator, le rotor étant muni d'aimants sur sa face périphérique externe.

Le groupe motopropulseur comprend un système de transmission, comprenant par exemple un embrayage, permettant de transmettre un mouvement de rotation entre le rotor et l'arbre intermédiaire.

Le groupe motopropulseur comprend un système de transmission mécanique permettant de transmettre la rotation de l'arbre intermédiaire à l'arbre d'hélice à l'état fermé du deuxième embrayage. Selon un mode de réalisation, le système de transmission mécanique est un système de réduction.

Avantageusement, le système de transmission mécanique est logé dans le rotor.

Le système de transmission mécanique comprend par exemple un train épicycloïdal avec une partie couplée à l'arbre intermédiaire et une partie couplée à une partie du deuxième embrayage, l'autre partie du deuxième embrayage étant couplée à l'arbre d'hélice.

Selon un mode de réalisation, le deuxième embrayage comprend une partie couplée à rotation avec l'arbre intermédiaire, par exemple via le système de transmission mécanique, et une partie couplée, de préférence solidaire, à rotation avec l'arbre d'hélice.

Selon un mode de réalisation, le quatrième embrayage comprend une partie qui est, à l'état fermé du premier embrayage, solidaire en rotation de l'arbre de sortie du moteur thermique, et une autre partie qui est montée solidaire en rotation du rotor du moteur électrique.

Selon un mode de réalisation, le troisième embrayage comprend une partie solidaire en rotation du rotor du moteur électrique par l'intermédiaire d'un système de transmission mécanique, et une partie solidaire en rotation de l'hélice.

Selon un mode de réalisation, le système d'alimentation électrique comporte aussi un système de gestion électrique qui comprend :
- un boîtier haute-tension qui permet d'ouvrir ou de fermer le circuit d'alimentation entre la batterie et le moteur électrique ;
- un contrôleur qui permet de traiter le courant fourni par la batterie ou produit par le moteur électrique lorsqu'il fonctionne en génératrice.

Selon un mode de réalisation, il est proposé un procédé de pilotage conforme à l'une quelconque des revendications 9 à 15.

### BREVE DESCRIPTION DES DESSINS

D'autres caractéristiques et avantages de l'invention ressortiront encore de la description qui suit, laquelle est purement illustrative et non limitative et doit être lue en regard des dessins annexés, sur lesquels :
- la Figure 1 est une vue schématique d'un aéronef conformément à un mode de réalisation de l'invention ;
- la Figure 1A est une vue schématique d'un groupe motopropulseur d'un aéronef conformément à un mode de réalisation de l'invention ;
- la Figure 2 est une vue schématique d'un aéronef conformément à un mode de réalisation de l'invention, lors de son décollage et/ou de sa montée ;
- la Figure 2A est une vue schématique d'un groupe motopropulseur d'un aéronef conformément à un mode de réalisation de l'invention, en mode de propulsion électrique ;
- la Figure 2B est une vue schématique d'un groupe motopropulseur d'un aéronef conformément à un mode de réalisation de l'invention, en mode de propulsion thermique ;
- la Figure 2C est une vue schématique d'un groupe motopropulseur d'un aéronef conformément à un mode de réalisation de l'invention, en mode de propulsion thermique et électrique ;
- la Figure 3 est une vue schématique d'un aéronef conformément à un mode de réalisation de l'invention, au cours de son sol, par exemple en palier ;
- la Figure 3A est une vue schématique d'un groupe motopropulseur d'un aéronef conformément à un mode de réalisation de l'invention, en mode recharge en vol ;
- la Figure 4 est une vue schématique d'un aéronef conformément à un mode de réalisation de l'invention, au cours d'une descente de l'aéronef ;
- la Figure 4A est une vue schématique d'un groupe motopropulseur d'un aéronef conformément à un mode de réalisation de l'invention, en mode récupération d'énergie électrique ;
- la Figure 5 est une vue schématique d'un aéronef conformément à un mode de réalisation de l'invention, l'aéronef étant au sol ;
- la Figure 5A est une vue schématique d'un groupe motopropulseur d'un aéronef conformément à un mode de réalisation de l'invention, en mode recharge via son moteur thermique alors que l'aéronef est au sol ;
- la Figure 6 est une vue schématique d'une variante non revendiquée de groupe motopropulseur.

### DESCRIPTION DETAILLEE

Le concept de l'invention est décrit plus complètement ci-après avec référence aux dessins joints, sur lesquels des modes de réalisation du concept de l'invention sont montrés. Sur les dessins, la taille et les tailles relatives des éléments peuvent être exagérées à des fins de clarté. Des numéros similaires font référence à des éléments similaires sur tous les dessins. Cependant, ce concept de l'invention peut être mis en oeuvre sous de nombreuses formes différentes et ne devrait pas être interprété comme étant limité aux modes de réalisation exposés ici, mais par les revendications. Au lieu de cela, ces modes de réalisation sont proposés de sorte que cette description soit complète, et communiquent l'étendue du concept de l'invention aux hommes du métier. Les modes de réalisation qui suivent sont examinés, par souci de simplification, en relation avec la terminologie et la structure d'un aéronef. Comme expliqué ci-après, l'engin peut aussi être un engin nautique.

Une référence dans toute la spécification à « un mode de réalisation » signifie qu'une fonctionnalité, une structure, ou une caractéristique particulière décrite en relation avec un mode de réalisation est incluse dans au moins un mode de réalisation de la présente invention. Ainsi, l'apparition de l'expression « dans un mode de réalisation » à divers emplacements dans toute la spécification ne fait pas nécessairement référence au même mode de réalisation. En outre, les fonctionnalités, les structures, ou les caractéristiques particulières peuvent être combinées dans un ou plusieurs modes de réalisation.

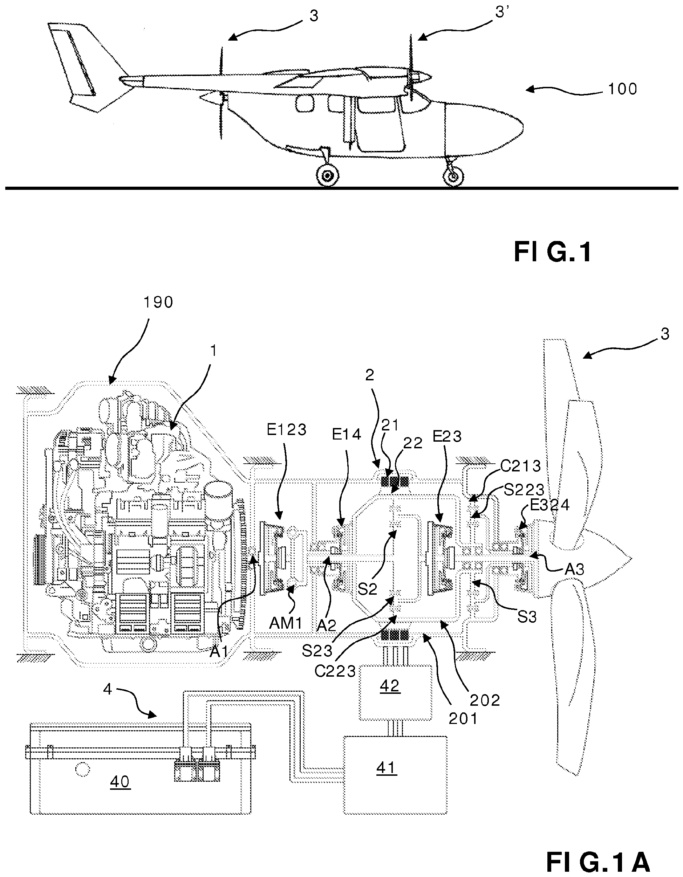

A la figure 1, on a illustré un engin qui est un aéronef 100 à hélice. L'aéronef est par exemple un avion, un drone ou un hélicoptère.

L'aéronef 100 comporte un groupe motopropulseur, encore appelé module de puissance, qui comprend un carter 190 et un système de propulsion à hélice, une motorisation thermique et une motorisation électrique. Comme visibles aux figures 1 à 5 et comme expliqué ci-après, le carte 190 loge la motorisation thermique, le rotor 202 du moteur électrique 2, le stator 201 pour être formé par une partie du carter 190.

Le groupe motopropulseur peut également être appliqué à une propulsion nautique, de sorte que l'engin peut être un engin nautique. Le système de propulsion à hélice comprend une hélice 3 et un arbre A3 d'hélice auquel est fixé l'hélice 3.

A titre d'exemple, le moteur thermique et/ou le moteur électrique peuvent permettre d'entraîner un ou plusieurs autres systèmes de propulsion à hélice supplémentaires 3' comme schématisé sur la figure 1. Ce type de configuration peut être appelé « propulsion distribuée ».

La motorisation thermique comprend un moteur thermique 1 qui présente un arbre A1 de sortie, entrainable en rotation par le moteur thermique. Le moteur thermique peut par exemple tourner à une vitesse de l'ordre de 6000 tours/minute.

Selon un mode de réalisation, le groupe motopropulseur comprend un amortisseur de couple AM1 permettant de corriger/lisser les acyclismes du moteur thermique.

La motorisation électrique comprend un moteur électrique 2. Le moteur électrique 2 peut tourner par exemple à une vitesse de l'ordre de 6000 tours/minute. La motorisation électrique comporte aussi un système d'alimentation 4 électrique qui comprend une batterie 40 permettant d'alimenter le moteur électrique 2.

Un système de réduction, par exemple à train épicycloïdal tel que présenté ci-après, permet que l'hélice soit entraînée à une vitesse plus faible, par exemple de l'ordre de 2000 tours/minute.

Le système d'alimentation 4 électrique comporte aussi un système de gestion électrique 41, 42 qui comprend un boîtier haute-tension 41 qui permet d'ouvrir ou de fermer le circuit d'alimentation entre la batterie 40 et le moteur électrique 2. Le système d'alimentation 4 électrique comporte aussi un contrôleur 42 qui permet de traiter le courant fourni par la batterie 40 ou produit par le moteur électrique 2 lorsqu'il fonctionne en génératrice.

A titre d'exemple, le contrôleur 42 peut ainsi transformer le courant continu issu de la batterie 40 en courant alternatif, par exemple en le hachant pour alimenter le moteur électrique 2, et inversement pour transformer le courant alternatif produit par le moteur électrique 2 en courant continu pour permettre la recharge de la batterie 40, lorsque le moteur électrique 2 fonctionne en génératrice, en particulier lorsque, comme expliqué ci-après, le rotor du moteur électrique 2 est entraîné par le moteur thermique 1 ou l'hélice 3.

Le groupe motopropulseur comprend aussi un système d'embrayages configuré pour pouvoir présenter plusieurs configurations comme détaillé ci-après. Comme expliqué ci-après, l'agencement de la motorisation électrique, de la motorisation thermique et du système de propulsion à hélice permet, en combinaison avec le système d'embrayages, de sélectivement :
- entraîner le système de propulsion à hélice 3 pour la propulsion de l'aéronef à l'aide du moteur thermique 1 seul ;
- entraîner le système de propulsion à hélice 3 dans le sens de la propulsion de l'aéronef à l'aide du moteur thermique 1 seul et d'entraîner le moteur électrique 2 pour le rechargement de la batterie et éventuellement d'une ou plusieurs autres batteries, à l'aide du moteur thermique 1 ;
- entraîner le système de propulsion à hélice 3 pour la propulsion de l'aéronef à l'aide de la motorisation électrique 2 seule ;
- entraîner le système de propulsion à hélice 3 à l'aide du mouvement de rotation de l'arbre de sortie du moteur thermique 1 transmis à l'arbre d'hélice et du mouvement de rotation du moteur électrique 2 transmis également à l'arbre d'hélice (ou hélice 3). Autrement dit, dans ce cas la rotation de l'hélice résulte de la transmission à l'arbre d'hélice A3 (ou hélice 3) du mouvement de rotation combiné du moteur thermique et du moteur électrique.

Selon un mode de réalisation particulier, le système d'embrayages du groupe motopropulseur présente une configuration permettant d'entraîner le moteur électrique 2 pour le rechargement de la batterie 40, lorsque l'hélice 3 est entraînée par effet éolien (ou hydrolien).

Le système d'embrayages peut comprendre des embrayages de type à friction ou à crabot.

Le groupe motopropulseur comprend un arbre intermédiaire A2. Comme visible aux figures, l'arbre intermédiaire A2 est interposé entre l'arbre de sortie 1 et l'arbre d'hélice A3. Par ailleurs, l'arbre intermédiaire A2 est logé dans le rotor 202.

### Système d'embrayages selon le mode de réalisation des figures 1 à 5

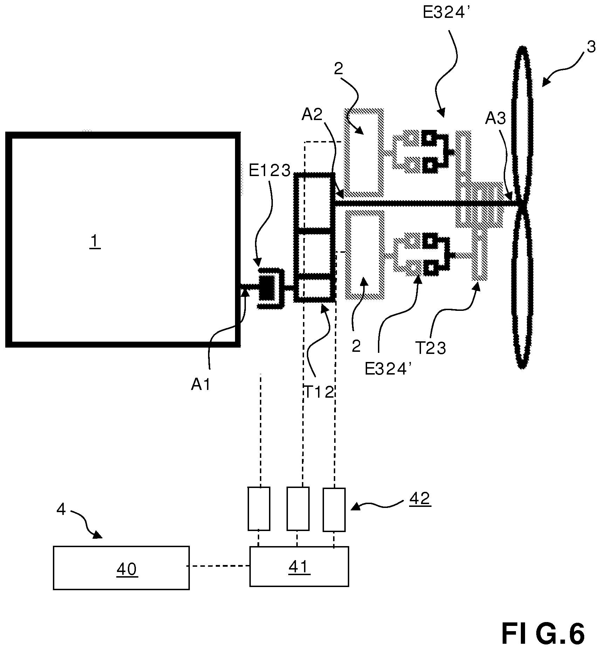

Dans le mode de réalisation des figures 1 à 5, l'arbre A2 est solidarisable (couplable) en rotation de l'arbre d'hélice A3 par l'intermédiaire de l'embrayage E23. Dans l'exemple alternatif illustré à la figure 6 et présenté ci-après, l'arbre A2 correspond à une portion dudit arbre d'hélice A3.

Le système d'embrayages comprend un embrayage E123 qui, à l'état fermé, transmet la rotation du moteur thermique 1 à l'arbre intermédiaire A2. A l'état ouvert de l'embrayage E123, la rotation de la motorisation thermique 1 n'est plus transmise à l'arbre intermédiaire A2. L'embrayage E123 est situé entre l'arbre A1 de sortie du moteur thermique et l'arbre intermédiaire A2.

Le système d'embrayages comprend aussi un embrayage E324 qui, à l'état fermé, transmet la rotation du moteur électrique 2, en particulier du rotor 202, à l'hélice 3. A l'état ouvert de l'embrayage E324, le rotor 202 n'est plus couplé en rotation à l'hélice 3, ou arbre d'hélice A3 (en particulier lorsque l'embrayage E14 et/ou E23 est ouvert).

Le système d'embrayages comprend l'embrayage E23 qui, à l'état fermé, permet de transmettre la rotation de l'arbre intermédiaire A2 à l'arbre d'hélice A3, de préférence avec un système de réduction.

L'embrayage E23 permet de transmettre à l'arbre d'hélice A3 la rotation de l'arbre intermédiaire A2 qui provient de la rotation de l'arbre de sortie A1, à l'état fermé de l'embrayage E123, et/ou qui provient de la rotation du rotor 202 à l'état fermé de l'embrayage E14.

L'ouverture des embrayages permet d'interrompre la transmission de mouvement correspondante.

Dans l'exemple illustré aux figures 1 à 5, le système d'embrayages comprend un embrayage E14 dont une première partie est, à l'état fermé du premier embrayage E123, solidaire en rotation de l'arbre A1 de sortie du moteur thermique 1. Ladite première partie de l'embrayage E14 est montée solidaire en rotation d'une partie de l'arbre intermédiaire A2. Une deuxième partie de l'embrayage E14 est montée solidaire en rotation du rotor 202 du moteur électrique 2.

Dans l'exemple illustré aux figures 1 à 5, l'embrayage E324 présente une partie qui est couplée (en rotation) au rotor 202 du moteur électrique 2 par l'intermédiaire d'un système de transmission mécanique à engrenages S3, S223, C213, et dont l'autre partie est solidaire en rotation de l'hélice 3 (ou arbre d'hélice). En particulier, ladite autre partie est montée solidaire de la base du nez de l'hélice 3, encore appelé plateau d'hélice. L'embrayage E324 permet ainsi de transmettre la rotation du rotor 202 du moteur électrique 2 à l'hélice 3 (ou encore à l'arbre d'hélice A3 qui est solidaire de l'hélice).

En position fermée, l'embrayage E324 permet que le moteur électrique 2 soit entraîné par l'hélice 3 lorsque celle-ci est entraînée par le flux extérieur auquel elle est soumise (effet éolien ou hydrolien).

Le système de transmission mécanique S3, S223, C213 est un système de transmission par engrènement. Le système de transmission est de préférence de type train épicycloïdal. Le train épicycloïdal comprend un arbre intérieur S3, appelé soleil, correspondant à une partie du rotor 202 du moteur électrique 2, et une couronne C213 portée par l'intérieur du corps creux du stator 201 (présenté ci-après) et un satellite S223 interposé entre le soleil S3 et la couronne C213. Le satellite S223 est solidaire d'un porte-satellite qui est coaxial avec l'arbre d'hélice A3. L'extrémité du porte-satellite opposée au satellite S223 est monté solidaire en rotation d'une partie de l'embrayage E324.

L'embrayage E23 comprend une partie couplée (en rotation) à l'arbre intermédiaire A2 par le système transmission mécanique à engrenages S2, S23, C223 et une autre partie solidaire en rotation de l'arbre d'hélice A3.

Dans l'exemple illustré aux figures 1 à 5, le système de transmission mécanique S2, S23, C223 est un système de transmission par engrènement. Le système de transmission est de préférence de type train épicycloïdal. Le train épicycloïdal comprend un arbre intérieur S2, appelé soleil, correspondant à une partie de l'arbre intermédiaire 2 et une couronne C223 portée par l'intérieur du corps creux du rotor. Un satellite S23 est interposé entre le soleil S2 et la couronne C223. Le satellite S23 est solidaire d'un porte-satellite qui est coaxial avec l'arbre intermédiaire A2 et l'arbre d'hélice A3. L'extrémité du porte-satellite opposée au satellite S23 est solidaire en rotation d'une partie de l'embrayage E23.

### Motorisation électrique selon le mode de réalisation des figures 1 à 5

Comme illustré aux figures 1 à 5, le moteur électrique 2 comprend un stator 201 et un rotor 202. Le stator 201 a un corps creux muni d'un bobinage 21 sur sa face interne. Dans l'exemple illustré aux figures 1 à 5, le stator 201 est une partie du carter 190.

Le rotor 202 a un corps rotatif autour de l'axe (longitudinal) de l'arbre intermédiaire A2 et à l'intérieur du stator 201. Selon l'état de configuration du système d'embrayage le rotor peut tourner autour de l'arbre intermédiaire A2, relativement audit arbre intermédiaire, ou tourner avec ledit arbre intermédiaire A2 autour dudit axe (longitudinal) de l'arbre intermédiaire A2. Avantageusement, le rotor 202 est muni d'aimants 22 sur sa face périphérique externe.

L'entraînement de l'arbre intermédiaire A2 en rotation par l'arbre A1 de sortie du moteur 1 ou par la rotation du rotor 202 du moteur électrique 2, permet d'entraîner en rotation le satellite S23 et ainsi le porte-satellite couplé à l'embrayage E23. La fermeture de l'embrayage E23 permet de transmettre cette rotation à l'arbre d'hélice A3 pour l'entraînement en rotation de l'hélice 3.

Ainsi, la rotation de l'arbre intermédiaire A2 peut être transmise à l'arbre d'hélice A3, et donc à l'hélice 3, par fermeture de l'embrayage E23.

Par ailleurs, la fermeture de l'embrayage E324 permet de transmettre le mouvement de rotation entre le rotor 202 du moteur électrique 2 et l'hélice 3.

Selon un mode de réalisation, le système d'embrayages E123, E14, E23, E324 est aussi configuré pour présenter une configuration selon laquelle l'hélice 3, mise en rotation par effet éolien ou hydrolien, transmet son mouvement de rotation au moteur électrique 2 pour générer un courant électrique permettant de recharger la batterie 40.

Selon un mode de réalisation, l'un des embrayages E14, E324 est ouvert, tandis que l'autre embrayage E324, E14 est fermé.

On peut prévoir qu'une ou chacune des parties d'un embrayage montée solidaire en rotation d'un arbre soit monté coulissant, par exemple à l'aide de cannelures, sur ledit arbre pour passer d'une position de fermeture à une position d'ouverture et inversement.

### Procédé de pilotage

Le groupe motopropulseur présenté ci-avant permet de mettre en oeuvre différents procédés de pilotage de l'aéronef en adaptant la configuration des embrayages.

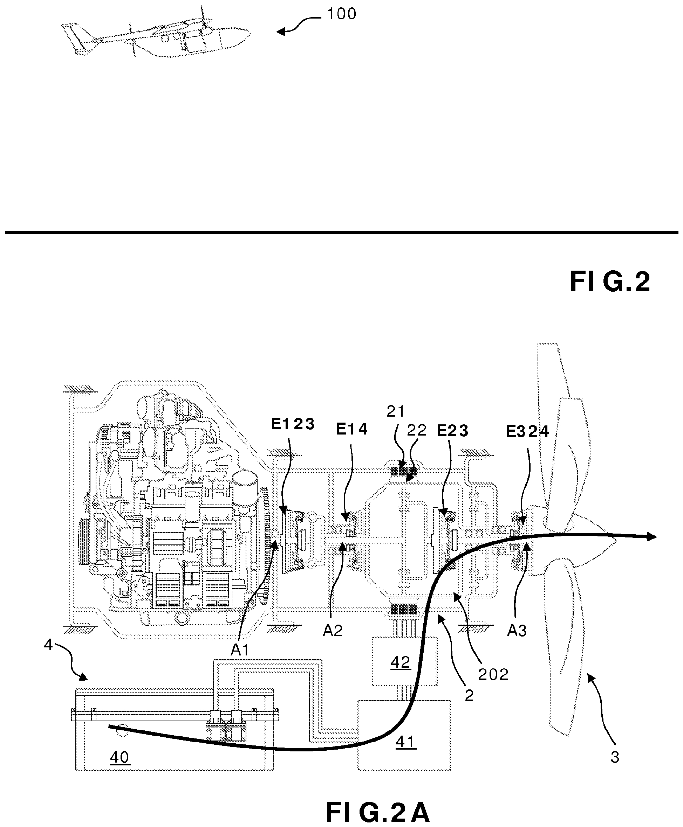

Dans l'exemple illustré aux figures 2A, 2B, 2C, 3A, 4A, 5A les embrayages sont représentés par simplification en position ouverte. Pour autant, la description ci-après précise la configuration réelle, ouverte ou fermée, de chacun desdits embrayages selon le procédé de pilotage mis en oeuvre. Par ailleurs, des flèches ont été ajoutées (distinctes des flèches de référence) pour symboliser la chaîne de transmission de mouvement qui est active et le cas échéant le courant électrique délivré ou reçu par le système d'alimentation électrique.

Pour un usage optimal de l'aéronef lors d'une phase de décollage et/ou de montée, le groupe motopropulseur permet une propulsion électrique de l'aéronef.

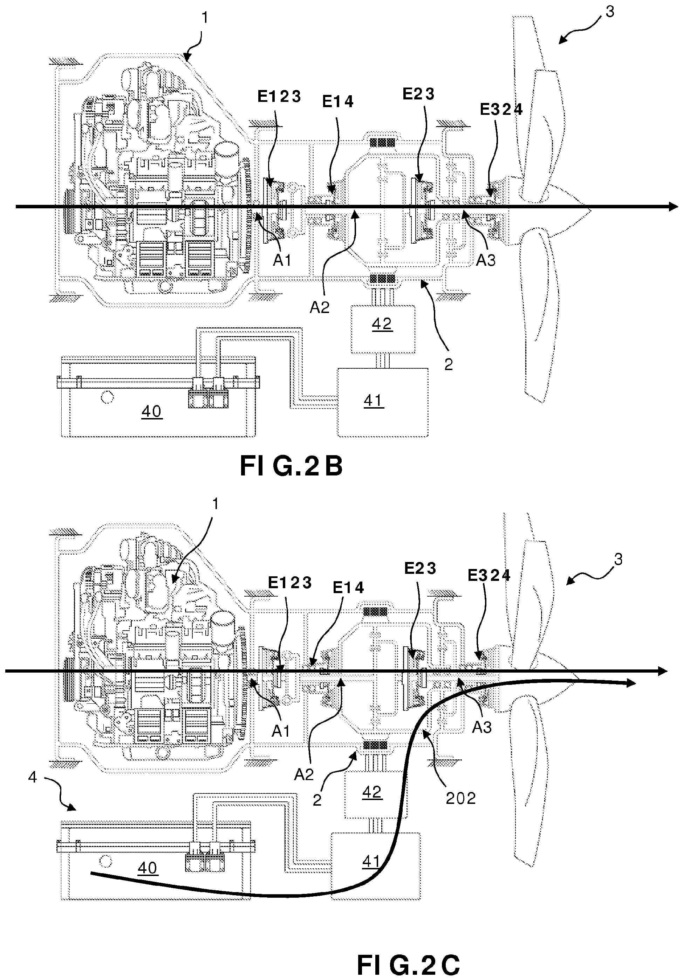

Dans l'exemple illustré aux figures 2 et 2A, les embrayages sont amenés dans la configuration suivante. L'embrayage E123 est ouvert pour libérer le moteur thermique 1 par rapport à l'hélice 3. L'embrayage E14 et l'embrayage E23 sont de préférence ouverts. L'embrayage E324 est fermé pour transmettre le mouvement du moteur électrique 2 à l'hélice 3. La flèche montre que le mouvement de rotation du rotor 202 du moteur électrique 2, alimenté électriquement par la batterie 40, est transmis à l'hélice 3 par l'embrayage E324.

Dans l'hypothèse d'une panne se produisant sur la chaîne de transmission électrique, le groupe motopropulseur permet d'utiliser la propulsion thermique sans utilisation de la motorisation électrique.

Ainsi, dans l'exemple illustré à la Figure 2B, les embrayages peuvent être amenés dans une configuration selon laquelle l'embrayage E123 et l'embrayage E23 sont fermés pour transmettre le mouvement du moteur thermique 1 à l'hélice 3. Le mouvement du moteur thermique 1 est transmis à l'hélice 3 par les arbres A1, A2 et A3. Selon un aspect particulier illustré pour le mode de réalisation de la figure 2B, l'embrayage E14 et l'embrayage E324 sont ouverts pour éviter que le rotor 202 du moteur électrique 2 ne tourne. La flèche montre que le moteur thermique 1 transmet son mouvement de rotation à l'hélice 3 via les embrayages E123 et E23.

Une panne peut résulter par exemple d'une surchauffe de la batterie, d'un dysfonctionnement d'un composant de la chaîne de transmission électrique. Il en résulte que le rotor du moteur électrique ne tourne plus.

Comme expliqué ci-dessus, en cas de panne sur la chaîne de transmission électrique, on peut prévoir par sécurité d'ouvrir E324 et de préférence E14 pour réduire le risque de problème électrique supplémentaire qui résulterait de la rotation dans un sens ou dans l'autre du rotor 202.

La panne peut être détectée en fonction des critères suivants qui peuvent être pris ou non dans toute combinaison techniquement possible :
- diminution de puissance électrique par rapport à une valeur seuil,
- diminution de vitesse rotation,
- diminution de la pente de la trajectoire,
- diminution de la vitesse d'avance de l'aéronef,
- augmentation inusuelle de l'ampérage

Lorsqu'une panne électrique est détectée alors que seule la propulsion électrique était utilisée, on peut ainsi prévoir de passer en mode propulsion thermique pour palier la panne sur la chaîne de transmission électrique.

Une telle configuration des embrayages qui permet un entraînement de l'hélice par le moteur thermique seul, c'est-à-dire sans apport du moteur électrique, peut aussi être utilisée lors d'un décollage normal pour conserver la charge de la batterie électrique ou lorsque celle-ci est déchargée.

Une telle configuration des embrayages peut aussi être utilisée lors d'un vol en palier de l'aéronef lorsque la batterie est considérée comme suffisamment chargée et que l'on souhaite conserver sa charge.

Le groupe motopropulseur permet en outre de combiner le mouvement de rotation fourni par le moteur thermique et le mouvement de rotation fourni par le moteur électrique pour entraîner l'hélice.

Ainsi, par exemple lorsque la piste de décollage est courte, afin de bénéficier d'un mode dit superpuissance, c'est-à-dire pour une propulsion par usage cumulé du moteur thermique 1 et du moteur électrique 2, les embrayages peuvent être amenés dans la configuration suivante illustrée à la Figure 2C. L'embrayage E123 est fermé, l'embrayage E14 est ouvert, l'embrayage E23 est fermé pour transmettre le mouvement du moteur thermique 1 à l'hélice 3 et l'embrayage E324 est fermé pour transmettre le mouvement du moteur électrique 2 à l'hélice 3. Les flèches montrent que le moteur thermique transmet son mouvement de rotation à l'hélice via les embrayages E123 et E23, tandis que le mouvement de rotation du rotor 202 du moteur électrique 2 alimenté en courant par la batterie 40 est transmis à l'hélice par l'embrayage E324.

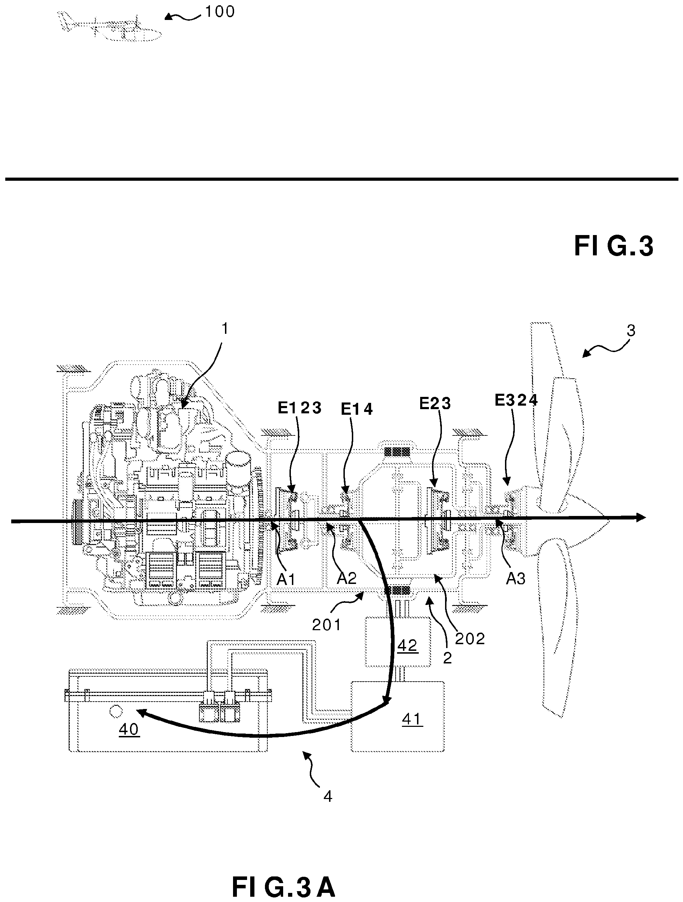

Le groupe motopropulseur permet en outre de recharger la batterie 40 à l'aide du moteur thermique 1 tout en conservant un entraînement en rotation de l'hélice 3. Ainsi, par exemple pour une recharge en vol de l'aéronef comme illustré aux figures 3 et 3A, les embrayages peuvent être amenés dans la configuration suivante. L'embrayage E324 est ouvert. L'embrayage E123, l'embrayage E14 et l'embrayage E23 sont fermés. Ainsi, comme l'illustre la flèche, le moteur thermique 1 entraine l'arbre intermédiaire A2, ce qui fait tourner le rotor 202 muni des aimants 22 en regard du bobinage 21 du stator 201 et génère ainsi une courant dans le bobinage 21, tout en entraînant l'arbre d'hélice A3. Le système de gestion électrique 41, 42 contrôle le courant produit par la rotation du rotor 202 afin de recharger la batterie 40.

Un tel mode de fonctionnement du groupe motopropulseur permet d'utiliser le surplus de puissance du moteur thermique 1 pour recharger la batterie 40 en vol, notamment lorsque la batterie a été utilisée pour la propulsion électrique en phase de roulage, décollage et/ou de montée.

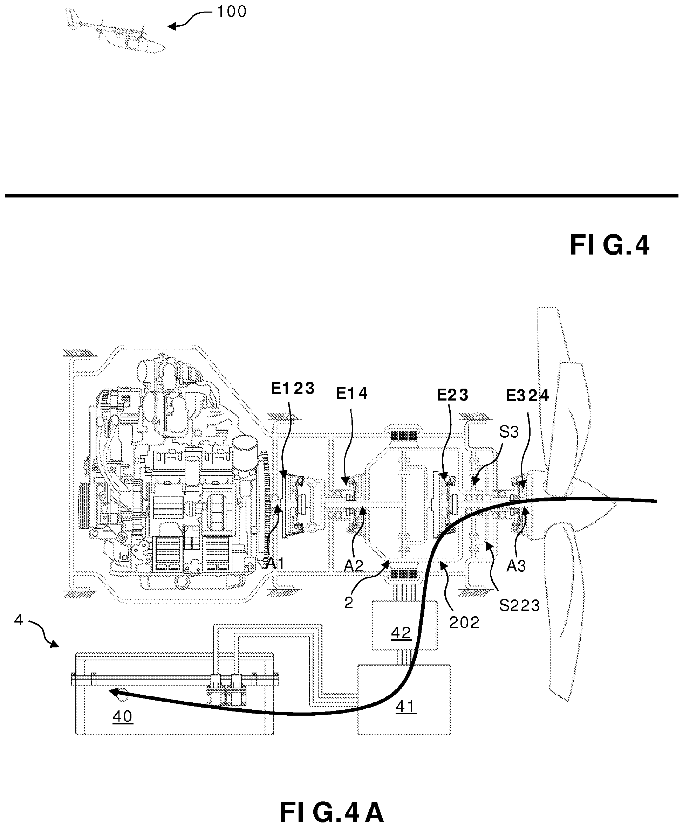

Le groupe motopropulseur permet une récupération d'énergie par effet éolien ou hydrolien. Ainsi, notamment lors d'une descente de l'aéronef en laissant l'hélice 3 tourner sous l'effet du flux d'air dans lequel elle se situe, comme illustré aux Figures 4 et 4A, les embrayages peuvent être amenés dans la configuration suivante. L'embrayage E123 et l'embrayage E14 sont ouverts pour découpler l'hélice 3 par rapport au moteur thermique 1 et découpler le rotor 202 par rapport au moteur thermique 1. De préférence, l'embrayage E23 est ouvert. L'embrayage E324 est fermé. La flèche montre ainsi que le mouvement de l'hélice 3 est transmis au rotor 202 du moteur électrique 2 via le satellite S223 et le soleil S3 et que le courant ainsi généré est utilisé pour recharger la batterie 40.

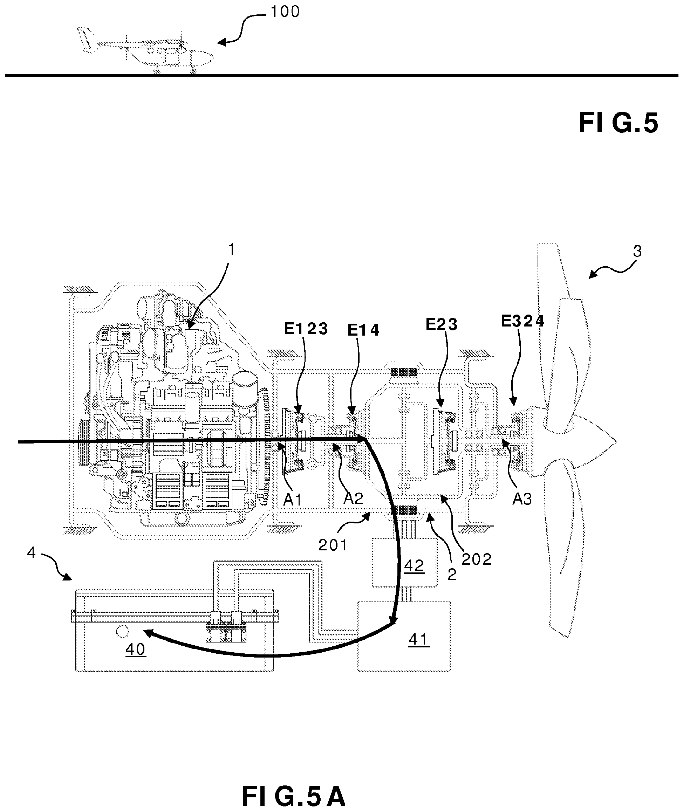

Le groupe motopropulseur permet de recharger la batterie 40 à l'aide du moteur thermique 1 sans entraîner l'hélice 3. Ainsi, par exemple pour une recharge au sol de l'aéronef et comme illustré aux Figures 5 et 5A, les embrayages peuvent être amenés dans la configuration suivante. L'embrayage E324 et l'embrayage E23 sont ouverts. L'embrayage E123 et l'embrayage E14 sont fermés. Ainsi comme le montre la flèche de la figure 5A, le moteur thermique 1 entraine l'arbre intermédiaire A2 pour faire tourner le rotor 202 muni des aimants 22 en regard du bobinage 21 du stator 201 afin de générer une courant que le système de gestion électrique 41, 42 contrôle pour recharger la batterie 40.

Selon un mode de réalisation particulier, l'aéronef comprenant des roues munies d'une motorisation électrique connectée à la batterie 40 d'alimentation de l'aéronef par l'intermédiaire d'un système 41, 42 de gestion électrique. Dans ce cas le groupe motopropulseur permet d'alimenter la motorisation électrique des roues par la batterie 40 électrique.

Le système de gestion de la motorisation électrique des roues peut être celui qui sert également à la gestion de l'alimentation du moteur électrique de l'aéronef ou être un système de gestion distinct, interposé entre la batterie et la motorisation électrique des roues.

Le moteur thermique 1 peut être éteint ou peut tourner au ralenti en attendant d'être utilisé. En particulier dans le cas où le moteur thermique est allumé, chacun des embrayages E23 et E324 est débrayé afin de ne pas entraîner l'hélice.

Le fait de ne pas entraîner l'hélice permet d'augmenter la sécurité du matériel et des personnes autour de l'avion en phase de roulage tout en évitant de consommer inutilement de l'énergie de la batterie par mise en rotation de l'hélice.

### Variante de réalisation non revendiquée illustrée à la Figure 6

Dans l'exemple de la figure 6, le groupe motopropulseur comprend un embrayage E123, par exemple à friction, entre ledit moteur thermique 1 et l'arbre intermédiaire A2.

Dans cet exemple de la figure 6, l'arbre d'hélice A3 est solidaire de l'arbre intermédiaire A2.

Une partie de l'embrayage E123 est couplée en rotation à l'arbre de sortie A1du moteur thermique 1 et l'autre partie de l'embrayage E123 est couplée en rotation à une partie de l'arbre intermédiaire A2.

L'arbre intermédiaire A2 est en deux parties décalées axialement l'une par rapport à l'autre. Les deux parties de l'arbre intermédiaire A2 sont raccordées entre elles par un dispositif de transmission T12 à poulies et courroie.

La motorisation électrique peut comprendre un ou plusieurs moteurs électriques 2 décalés axialement par rapport à l'arbre d'hélice A3. On pourrait également prévoir un décalage "radial" avec un système d'engrenages à renvoi d'angle, et sur chaque arbre de sortie de moteur électrique un système de crabotage ou d'embrayage.

Chaque moteur électrique 2 est raccordé au système d'alimentation 4 électrique. En particulier, il est prévu un contrôleur 42 par moteur électrique 2.

L'arbre de sortie de chaque moteur électrique 2 est solidaire en rotation d'une partie d'un embrayage E324', de préférence de type crabot. L'autre partie de l'embrayage E324' est solidaire en rotation d'un système de transmission T23, par exemple à poulies et courroie, agencé pour transmettre le mouvement de rotation de la motorisation électrique à l'arbre d'hélice A3.

Chaque embrayage E324' permet de découpler le moteur électrique 2 associé par rapport au système de transmission T23, notamment en cas de défaillance dudit ou de chacun desdits moteurs électriques.

Ainsi, dans cet exemple illustré à la figure 6, chaque moteur électrique 2 est doté d'un système indépendant d'embrayage E324' de type à friction ou par crabotage, qui peut être assimilé fonctionnellement à l'embrayage E324 du mode de réalisation des figures 1 à 5.

Seuls deux moteurs électriques sont schématisés à la figure 6, mais un troisième moteur électrique est néanmoins présent et relié au système de transmission T23, de manière similaire aux autre moteurs électrique, par un embrayage à friction ou à crabots, par exemple du type de l'embrayage E324'. La motorisation électrique présente de préférence trois moteurs électriques ou plus.

Dans le mode de réalisation illustré aux figures 1 à 5, les arbres du groupe motopropulseur sont coaxiaux et la transmission de mouvement d'un arbre s'effectue à l'aide d'embrayages également coaxiaux. Selon la variante non revendiquée de la figure 6, les arbres A1 et A3 sont décalés axialement.

On comprend ainsi que l'arbre d'hélice A3 peut être entraîné par la motorisation électrique à l'état fermé du ou de chaque 'embrayage E324', et/ou par le moteur thermique à l'état fermé de l'embrayage E123.

### Modes de réalisation particuliers

On peut prévoir que le système d'embrayages soit commandé pour passer d'une configuration à une autre par un dispositif de commande manuel ou automatique. En particulier on peut prévoir qu'une unité de pilotage, telle qu'un calculateur, permette de piloter un système d'actionnement des embrayages pour commander le passage d'une configuration à un autre. L'unité de pilotage peut se présenter sous la forme d'un processeur et d'une mémoire de données dans laquelle sont stockées des instructions informatiques exécutables par ledit processeur, ou encore sous la forme d'un microcontrôleur.

Autrement dit, les fonctions et étapes décrites peuvent être mise en oeuvre à l'aide de programme informatique ou via des composants matériels (p. ex. des réseaux de portes programmables). En particulier, les fonctions et étapes opérées par l'unité de pilotage peuvent être réalisées par des jeux d'instructions ou modules informatiques implémentés dans un processeur ou contrôleur ou être réalisées par des composants électroniques dédiés ou des composants de type FPGA ou ASIC. Il est aussi possible de combiner des parties informatiques et des parties électroniques.

Dans le cas où l'aéronef est un avion muni de roues, il est également possible de prévoir qu'une ou plusieurs roues soit munies d'un moteur électrique, par exemple incorporé dans le moyeu. Le moteur électrique de chaque roue peut être raccordé au système de gestion électrique de l'aéronef. Ainsi pour la phase de roulage, le ou les moteurs électriques des roues peuvent être alimentés par la batterie 40 à l'aide du système d'alimentation 4 électrique.

L'aéronef peut comprendre plusieurs systèmes de propulsion à hélice auxiliaires qui peuvent être commandés de manière indépendante les uns des autres.

Selon un exemple, l'aéronef peut comprendre deux moteurs à hélice auxiliaires (de préférence latéraux) et entre les deux moteurs à hélice, le système de propulsion à hélice du groupe motopropulseur selon l'invention. Ces motorisations auxiliaires et le groupe motopropulseur peuvent être indifféremment de type tractif ou propulsif.

On peut prévoir que la ou chaque hélice est à pas variable et qu'elle peut être mise en configuration dite drapeau pour réduire la trainée en cas de non utilisation.

L'invention n'est pas limitée aux modes de réalisation illustrés dans les dessins.

De plus, le terme « comprenant » n'exclut pas d'autres éléments ou étapes. En outre, des caractéristiques ou étapes qui ont été décrites en référence à l'un des modes de réalisation exposés ci-dessus peuvent également être utilisées en combinaison avec d'autres caractéristiques ou étapes d'autres modes de réalisation exposés ci-dessus.

## Revendications

1. Engin (100), tel qu'un aéronef, muni d'un groupe motopropulseur qui comprend :
- une motorisation thermique comprenant un moteur thermique (1) et un arbre (A1), appelé arbre de sortie du moteur thermique, entrainable en rotation par le moteur thermique ;
- une motorisation électrique comprenant un moteur électrique (2) ;
- un système d'alimentation (4) électrique comprenant une batterie (40) permettant d'alimenter le moteur électrique (2) ;
- un système de propulsion à hélice comprenant une hélice (3) et un arbre (A3), appelé arbre d'hélice, auquel est couplé l'hélice (3) ;
le groupe motopropulseur comprenant aussi un système d'embrayages (E123, E14, E23, E324) configuré pour permettre, sélectivement :
- d'entraîner l'hélice (3) à l'aide du moteur thermique (1) sans transmission de rotation du moteur électrique (2) à l'hélice (3) ;
- d'entraîner l'hélice (3) à l'aide du moteur électrique (2) sans transmission de rotation du moteur thermique (1) à l'hélice (3) ;
- d'entraîner l'hélice (3) par transmission combinée du mouvement de rotation du moteur thermique (1) à l'hélice (3), et du mouvement de rotation du moteur électrique (2) à l'hélice (3) ;
le groupe motopropulseur comprenant un arbre (A2), appelé arbre intermédiaire, solidaire de ou couplable en rotation à l'arbre d'hélice (A3),
et le système d'embrayages comprenant :
- un premier embrayage (E123) configuré pour, à l'état fermé, transmettre la rotation du moteur thermique (1) à l'arbre intermédiaire (A2), et
- un deuxième embrayage (E23) configuré pour, à l'état fermé, transmettre la rotation de l'arbre intermédiaire (A2) à l'arbre d'hélice (A3) et un troisième embrayage (E324) configuré pour, à l'état fermé, transmettre la rotation du moteur électrique (2) à l'arbre d'hélice (A3) ;
le moteur électrique (2) comprenant un stator (201) et un rotor (202), le rotor présentant un corps creux et étant monté rotatif autour de l'arbre intermédiaire (A2) et à l'intérieur du stator (201), le rotor (202) et l'arbre intermédiaire (A2) étant coaxiaux.

2. Engin (100) selon la revendication 1, dans lequel chaque arbre (A1, A2) qui forme partie de la chaîne de transmission de mouvement à l'hélice (3) est coaxial avec l'arbre d'hélice (A3).

3. Engin (100) selon la revendication 1 ou 2, dans lequel le stator (201) se présente sous la forme d'un corps creux et muni d'un bobinage (21), et le rotor (202) est muni d'aimants (22).

4. Engin (100) selon l'une quelconque des revendication 1 à 3, dans lequel le groupe motopropulseur comprend aussi un système de transmission mécanique (S2, S23, C223) de type train épicycloïdal, qui comprend :
- un arbre intérieur (S2), appelé soleil, correspondant à une partie de l'arbre intermédiaire (2) et une couronne (C223) portée par l'intérieur du corps creux du rotor ;
- un satellite (S23) interposé entre le soleil (S2) et la couronne (C223), et un porte-satellite dont l'extrémité opposée au satellite (S23) est solidaire en rotation d'une partie du deuxième embrayage (E23), le deuxième embrayage (E23) comprenant une autre partie solidaire en rotation de l'arbre d'hélice (A3).

5. Engin (100) selon l'une quelconque des revendications 1 à 4, dans lequel le système d'embrayages comprend un quatrième embrayage (E14) configuré pour, à l'état fermé, transmettre la rotation du moteur thermique (1) au moteur électrique (2) pour le faire fonctionner en génératrice.

6. Engin (100) selon la revendication 5, dans lequel le quatrième embrayage (E14) comprend une partie qui est, à l'état fermé du premier embrayage (E123), solidaire en rotation de l'arbre (A1) de sortie du moteur thermique (1), et une autre partie qui est montée solidaire en rotation du rotor (202) du moteur électrique (2).

7. Engin (100) selon l'une quelconque des revendications 1 à 6, dans lequel le troisième embrayage (E324) comprend une partie solidaire en rotation du rotor (202) du moteur électrique (2) par l'intermédiaire d'un système de transmission mécanique (S3, S223, C213), et une partie solidaire en rotation de l'hélice (3).

8. Engin (100) selon l'une quelconque des revendications 1 à 6, dans lequel le système d'alimentation (4) électrique comporte aussi un système de gestion électrique (41, 42) qui comprend :
- un boîtier haute-tension (41) qui permet d'ouvrir ou de fermer le circuit d'alimentation entre la batterie (40) et le moteur électrique (2) ;
- un contrôleur (42) qui permet de traiter le courant fourni par la batterie (40) ou produit par le moteur électrique (2) lorsqu'il fonctionne en génératrice.

9. Procédé de pilotage d'un engin (100) conforme à l'une quelconque des revendications 5 à 6, **caractérisé en ce que** ledit procédé de pilotage comporte une étape de propulsion électrique, notamment lors d'une phase de décollage et/ou de montée, selon laquelle les embrayages sont amenés dans la configuration suivante :
- le premier embrayage (E123) est ouvert pour libérer le moteur thermique (1) par rapport à l'hélice (3) ;
- le quatrième embrayage (E14) et le deuxième embrayage (E23) sont de préférence ouverts ;
- le troisième embrayage (E324) est fermé pour transmettre le mouvement du moteur électrique (2) à l'hélice (3).

10. Procédé de pilotage d'un engin (100) conforme à l'une quelconque des revendications 1 à 8, dans lequel ledit procédé de pilotage comporte une étape de propulsion thermique sans utilisation de la motorisation électrique, par exemple lorsqu'une panne se produit sur la chaîne de transmission électrique, selon laquelle les embrayages sont amenés dans la configuration suivante :
- le premier embrayage (E123) est fermé ;
- le deuxième embrayage (E23) est fermé pour transmettre le mouvement du moteur thermique (1) à l'hélice (3).

11. Procédé de pilotage d'un engin (100) conforme à l'une quelconque des revendications 5 à 6, dans lequel ledit procédé de pilotage comporte une étape de propulsion par usage cumulé du moteur thermique (1) et du moteur électrique (2), selon laquelle les embrayages sont amenés dans la configuration suivante :
- le premier embrayage (E123) est fermé ;
- le deuxième embrayage (E23) est fermé pour transmettre le mouvement du moteur thermique (1) à l'hélice (3) ;
- le troisième embrayage (E324) est fermé pour transmettre le mouvement du moteur électrique (2) à l'hélice (3) ;
- le quatrième embrayage (E14)est ouvert.

12. Procédé de pilotage d'un engin (100) conforme à la revendication 5 ou 6, dans lequel ledit procédé de pilotage comporte une étape de recharge de la batterie (40) à l'aide du moteur thermique (1) tout en conservant un entraînement en rotation de l'hélice (3), par exemple pour une recharge en vol de l'engin, selon laquelle les embrayages sont amenés dans la configuration suivante :
le premier embrayage (E123), le quatrième embrayage (E14) et le deuxième embrayage (E23) sont fermés, de sorte que le moteur thermique (1) entraine l'arbre intermédiaire (A2) pour faire tourner le rotor (202) en regard du stator (201) afin de générer un courant, tout en entraînant l'arbre d'hélice (A3) ;
et en ce que le système de gestion électrique (41, 42) contrôle le courant produit par le moteur électrique (2) fonctionnant en génératrice pour recharger la batterie (40).

13. Procédé de pilotage d'un engin (100) conforme à la revendication 5 ou 6, dans lequel ledit procédé de pilotage comporte une étape de récupération d'énergie par effet éolien ou hydrolien, selon laquelle les embrayages sont amenés dans la configuration suivante :
- au moins l'un parmi le premier embrayage (E123) et le quatrième embrayage (E14) est ouvert pour découpler l'hélice (3) par rapport au moteur thermique (1) ou découpler le rotor (202) par rapport au moteur thermique (1) ;
- de préférence, le deuxième embrayage (E23) est ouvert ;
- le troisième embrayage (E324) est fermé pour transmettre le mouvement de l'hélice (3) au rotor (202) du moteur électrique (2).

14. Procédé de pilotage d'un engin (100) conforme à la revendication 5 ou 6, dans lequel ledit procédé de pilotage comporte une étape de recharge de la batterie (40) à l'aide du moteur thermique (1) sans entraîner l'hélice (3), selon laquelle les embrayages sont amenés dans la configuration suivante :
- ouverture du troisième embrayage (E324) et du deuxième embrayage (E23),
- fermeture du premier embrayage (E123) et du quatrième embrayage (E14), de sorte que le moteur thermique (1) entraine l'arbre intermédiaire (A2) pour faire tourner le rotor (202) afin de générer un courant,
et en ce que le système de gestion électrique (41, 42) contrôle le courant produit par le moteur électrique (2) fonctionnant en génératrice pour recharger la batterie (40).

15. Procédé de pilotage selon l'une quelconque des revendications 9 à 14, d'un engin (100) conforme à l'une quelconque des revendications 1 à 8, dans lequel, l'engin comprenant des roues munies d'une motorisation électrique connectée à la batterie (40) d'alimentation de l'engin par l'intermédiaire d'un système (41, 42) de gestion électrique, le procédé comprend l'alimentation de la motorisation électrique des roues par la batterie (40) électrique.

## Patentansprüche

1. Maschine (100), wie beispielsweise ein Flugzeug, die mit einem Antriebsaggregat versehen ist, das Folgendes umfasst:
- einen Verbrennungsmotorantrieb, umfassend einen Verbrennungsmotor (1) und eine Welle (A1), die als Abtriebswelle des Verbrennungsmotors bezeichnet wird und durch den Verbrennungsmotor in Drehung versetzt werden kann;
- einen elektrischen Motorantrieb, umfassend einen Elektromotor (2);
- ein Stromversorgungssystem (4), umfassend eine Batterie (40), die es ermöglicht, den Elektromotor (2) zu versorgen;
- ein Propellerantriebssystem, umfassend einen Propeller (3) und eine Welle (A3), die als Propellerwelle bezeichnet wird, an die der Propeller (3) gekoppelt ist;
das Antriebsaggregat auch umfassend ein Kupplungssystem (E123, E14, E23, E324) umfasst, das konfiguriert ist, um selektiv Folgendes zu ermöglichen:
- Antreiben des Propellers (3) mittels des Verbrennungsmotors (1) ohne Übertragung der Drehung des Elektromotors (2) auf den Propeller (3);
- Antreiben des Propellers (3) mittels des Elektromotors (2) ohne Übertragung der Drehung des Verbrennungsmotors (1) auf den Propeller (3);
- Antreiben des Propellers (3) durch kombinierte Übertragung der Drehbewegung des Verbrennungsmotors (1) auf den Propeller (3) und der Drehbewegung des Elektromotors (2) auf den Propeller (3);
das Antriebsaggregat umfassend eine Welle (A2) umfasst, die als Zwischenwelle bezeichnet wird, die fest mit der Propellerwelle (A3) verbunden oder drehbar damit koppelbar ist,
und das Kupplungssystem umfassend:
- eine erste Kupplung (E123), die konfiguriert ist, um in dem geschlossenen Zustand die Drehung des Verbrennungsmotors (1) auf die Zwischenwelle (A2) zu übertragen, und
- eine zweite Kupplung (E23), die konfiguriert ist, um in dem geschlossenen Zustand die Drehung der Zwischenwelle (A2) auf die Propellerwelle (A3) zu übertragen, und eine dritte Kupplung (E324), die konfiguriert ist, um in dem geschlossenen Zustand die Drehung des Elektromotors (2) auf die Propellerwelle (A3) zu übertragen;
der Elektromotor (2) umfassend einen Stator (201) und einen Rotor (202), wobei der Rotor einen Hohlkörper aufweist und drehbar um die Zwischenwelle (A2) und im Inneren des Stators (201) montiert ist, wobei der Rotor (202) und die Zwischenwelle (A2) koaxial sind.

2. Maschine (100) nach Anspruch 1, wobei jede Welle (A1, A2), die einen Teil der Bewegungsübertragungskette der Bewegung auf den Propeller (3) bildet, koaxial zu der Propellerwelle (A3) ist.

3. Maschine (100) nach Anspruch 1 oder 2, wobei der Stator (201) in Form eines Hohlkörpers vorliegt und mit einer Wicklung (21) versehen ist, und der Rotor (202) mit Magneten (22) versehen ist.

4. Maschine (100) nach einem der Ansprüche 1 bis 3, wobei das Antriebsaggregat auch ein mechanisches Übertragungssystem (S2, S23, C223) vom Typ Planetengetriebe umfasst, das Folgendes umfasst:
- eine innere Welle (S2), die als Sonne bezeichnet wird, die einem Teil der Zwischenwelle (2) entspricht, und einen Kranz (C223), der von der Innenseite des Hohlkörpers des Rotors getragen wird;
- einen Satelliten (S23), der zwischen die Sonne (S2) und den Kranz (C223) ein gefügt ist, und einen Satellitenträger, dessen Ende gegenüber dem Satelliten (S23) drehfest mit einem Teil der zweiten Kupplung (E23) verbunden ist, die zweite Kupplung (E23) umfassend einen anderen Teil, der drehfest mit der Propellerwelle (A3) verbunden ist.

5. Maschine (100) nach einem der Ansprüche 1 bis 4, wobei das Kupplungssystem eine vierte Kupplung (E14) umfasst, die konfiguriert ist, um in dem geschlossenen Zustand die Drehung des Verbrennungsmotors (1) auf den Elektromotor (2) zu übertragen, um diesen als Generator zu betreiben.

6. Maschine (100) nach Anspruch 5, wobei die vierte Kupplung (E14) einen Teil, der in dem geschlossenen Zustand der ersten Kupplung (E123) drehfest mit der Abtriebswelle (A1) des Verbrennungsmotors (1) verbunden ist, und einen anderen Teil, der drehfest mit dem Rotor (202) des Elektromotors (2) montiert ist, umfasst.

7. Maschine (100) nach einem der Ansprüche 1 bis 6, wobei die dritte Kupplung (E324) einen Teil, der über ein mechanisches Übertragungssystem (S3, S223, C213) drehfest mit dem Rotor (202) des Elektromotors (2) verbunden ist, und einen Teil, der drehfest mit dem Propeller (3) verbunden ist, umfasst.

8. Maschine (100) nach einem der Ansprüche 1 bis 6, wobei das Stromversorgungssystem (4) auch ein elektrisches Managementsystem (41, 42) aufweist, das Folgendes umfasst:
- einen Hochspannungskasten (41), der es ermöglicht, den Stromkreis zwischen der Batterie (40) und dem Elektromotor (2) zu öffnen oder zu schließen;
- eine Steuerung (42), die es ermöglicht, den Strom zu verarbeiten, der von der Batterie (40) bereitgestellt oder von dem Elektromotor (2) erzeugt wird, wenn er als Generator betrieben wird.

9. Verfahren zur Steuerung einer Maschine (100) gemäß einem der Ansprüche 5 bis 6, **dadurch gekennzeichnet, dass** das Steuerungsverfahren einen Schritt des elektrischen Antriebs umfasst, insbesondere während einer Start- und/oder Steigphase, wobei die Kupplungen in die folgende Konfiguration gebracht werden:
- die erste Kupplung (E123) ist geöffnet, um den Verbrennungsmotor in Bezug auf den Propeller (3) freizugeben;
- die vierte Kupplung (E14) und die zweite Kupplung (E23) sind vorzugsweise geöffnet sind;
- die dritte Kupplung (E324) ist geschlossen, um die Bewegung des Elektromotors (2) auf den Propeller (3) zu übertragen.

10. Steuerungsverfahren einer Maschine (100) nach einem der Ansprüche 1 bis 8, wobei das Steuerungsverfahren einen Schritt eines thermischen Antriebs ohne Verwendung des elektrischen Antriebs umfasst, beispielsweise wenn ein Fehler in der elektrischen Antriebskette auftritt, wobei die Kupplungen in die folgende Konfiguration gebracht werden:
- die erste Kupplung (E123) ist geschlossen;
- die zweite Kupplung (E23) ist geschlossen, um die Bewegung des Verbrennungsmotors (1) auf den Propeller (3) zu übertragen.

11. Steuerungsverfahren einer Maschine (100) nach einem der Ansprüche 5 bis 6, wobei das Steuerungsverfahren einen Schritt eines Antriebs durch kumulativen Nutzung des Verbrennungsmotors (1) und des Elektromotors (2) umfasst, wobei die Kupplungen in die folgende Konfiguration gebracht werden:
- die erste Kupplung (E123) ist geschlossen;
- die zweite Kupplung (E23) ist geschlossen, um die Bewegung des Verbrennungsmotors (1) auf den Propeller (3) zu übertragen;
- die dritte Kupplung (E324) ist geschlossen, um die Bewegung des Elektromotors (2) auf den Propeller (3) zu übertragen;
- die vierte Kupplung (E14) ist geöffnet.

12. Steuerungsverfahren einer Maschine (100) nach Anspruch 5 oder 6, wobei das Steuerungsverfahren einen Schritt zum Aufladen der Batterie (40) mittels des Verbrennungsmotors (1) unter Beibehaltung eines Drehantriebs des Propellers (3) umfasst, beispielsweise für ein Aufladen der Maschine während des Flugs, wobei die Kupplungen in die folgende Konfiguration gebracht werden:
die erste Kupplung (E123), die vierte Kupplung (E14) und die zweite Kupplung (E23) sind geschlossen sind, sodass der Verbrennungsmotor (1) die Zwischenwelle (A2) antreibt, um den Rotor (202) in Bezug auf den Stator (201) zu drehen, um einen Strom zu erzeugen, während er die Propellerwelle (A3) antreibt;
und dass das elektrische Managementsystem (41, 42) den Strom steuert, der von dem als Generator betriebenen Elektromotor (2) erzeugt wird, um die Batterie (40) aufzuladen.

13. Steuerungsverfahren einer Maschine (100) nach Anspruch 5 oder 6, wobei das Steuerungsverfahren einen Schritt einer Energierückgewinnung durch Wind- oder Wasserkraft umfasst, wobei die Kupplungen in die folgende Konfiguration gebracht werden:
- mindestens eine von der ersten Kupplung (E123) und der vierten Kupplung (E14) ist geöffnet ist, um den Propeller (3) in Bezug auf den Verbrennungsmotor (1) zu entkoppeln oder den Rotor (202) in Bezug auf den Verbrennungsmotor (1) zu entkoppeln;
- vorzugsweise wobei die zweite Kupplung (E23) geöffnet ist;
- die dritte Kupplung (E324) ist geschlossen ist, um die Bewegung des Propellers (3) auf den Rotor (202) des Elektromotors (2) zu übertragen.

14. Steuerungsverfahren einer Maschine (100) nach Anspruch 5 oder 6, wobei das Steuerungsverfahren einen Schritt zum Aufladen der Batterie (40) mittels des Verbrennungsmotors (1) umfasst, ohne den Propeller (3) anzutreiben, wobei die Kupplungen in die folgende Konfiguration gebracht werden:
- Öffnen der dritten Kupplung (E324) und der zweiten Kupplung (E23),
- Schließen der ersten Kupplung (E123) und der vierten Kupplung (E14),
sodass der Verbrennungsmotor (1) die Zwischenwelle (A2) antreibt, um den Rotor (202) zu drehen, um einen Strom zu erzeugen,
und dass das elektrische Managementsystem (41, 42) den Strom steuert, der von dem als Generator betriebenen Elektromotor (2) erzeugt wird, um die Batterie (40) aufzuladen.

15. Steuerungsverfahren nach einem der Ansprüche 9 bis 14 einer Maschine (100) nach einem der Ansprüche 1 bis 8, die Maschine umfassend Räder, die mit einem elektrischen Motorantrieb versehen sind, der über ein elektrisches Managementsystem (41, 42) zur Versorgung der Maschine mit der Batterie (40) verbunden ist, wobei das Verfahren die Versorgung des elektrischen Motorantriebs der Räder durch die elektrische Batterie (40) umfasst.

## Claims

1. A machine (100), such as an aircraft, equipped with a powertrain which comprises:
- a thermal actuator assembly comprising a thermal engine (1) and a shaft (A1), called output shaft of the thermal engine, drivable in rotation by the thermal engine;
- an electric actuator assembly comprising an electric motor (2);
- an electric power supply system (4) comprising a battery (40) for supplying power to the electric motor (2);
- a propeller propulsion system comprising a propeller (3) and a shaft (A3), called propeller shaft, to which the propeller (3) is coupled;
the powertrain also comprises a clutch system (E123, E14, E23, E324) configured, selectively:
- to drive the propeller (3) using the thermal engine (1) without transmission of the rotation of the electric motor (2) to the propeller (3);
- to drive the propeller (3) using the electric motor (2) without transmission of the rotation of the thermal engine (1) to the propeller (3);
- to drive the propeller (3) by combined transmission of the rotation of the thermal engine (1) to the propeller (3), and of the rotation of the electric motor (2) to the propeller (3);
the powertrain comprises a shaft (A2), called intermediate shaft, secured or able to be coupled in rotation to the propeller shaft (A3),
and the clutch system comprising:
- a first clutch (E123) configured, in the engaged state, to transmit the rotation of the thermal engine (1) to the intermediate shaft (A2), and
- a second clutch (E23) configured, in the engaged state, to transmit the rotation from the intermediate shaft (A2) to the propeller shaft (A3) and a third clutch (E324) configured, in the engaged state, to transmit the rotation from the electric motor (2) to the propeller shaft (A3); the electric motor (2) comprising a stator (201) and a rotor (202), the rotor having a hollow body and being mounted to rotate about the intermediate shaft (A2) and inside the stator (201), the rotor (202) and the intermediate shaft (A2) being coaxial.

2. The machine (100) according to claim 1, wherein each shaft (A1, A2) which forms part of the transmission chain for transmitting movement to the propeller (3) is coaxial with the propeller shaft (A3).

3. The machine (100) according to claim 1 or 2, wherein the stator (201) is provided with a hollow winding (21), and the rotor (202) is provided with magnets (22).

4. The machine (100) according to any one of claims 1 to 3, wherein the powertrain also comprises a mechanical transmission system (S2, S23, C223) of the epicyclic gear train type, which comprises:
- an inner shaft (S2), called sun gear, corresponding to a part of the intermediate shaft (2) and a ring gear (C223) carried by the interior of the hollow body of the rotor;
- a planet gear (S23) disposed between the sun gear (S2) and the ring gear (C223), and a planet carrier an end of which opposite the planet gear (S23) is secured in rotation with a part of the second clutch (E23), the second clutch (E23) comprising another part secured in rotation with the propeller shaft (A3).

5. The machine (100) according to any one of claims 1 to 4, wherein the clutch system comprises a fourth clutch (E14) configured, in the engaged state, to transmit the rotation of the thermal engine (1) to the electric motor (2) to cause the latter to function as a generator.

6. The machine (100) according to claim 5, wherein the fourth clutch (E14) comprises a part that, in the engaged state of the first clutch (E123), is secured in rotation with the output shaft (A1) of the thermal engine (1), and another part that is mounted secured in rotation with the rotor (202) of the electric motor (2).

7. The machine (100) according to any one of claims 1 to 6, wherein the third clutch (E324) comprises a part secured in rotation with the rotor (202) of the electric motor (2) via a mechanical transmission system (S3, S223, C213) and a part secured in rotation with the propeller (3).

8. The machine (100) according to any one of claims 1 to 6, wherein the electric power supply system (4) also comprises an electric management system (41, 42) which comprises:
- a switching unit (41) for opening or closing a power supply circuit between the battery (40) and the electric motor (2);
- a controller (42) for managing the supply of current provided by the battery (40) or produced by the electric motor (2) when the latter functions as a generator.

9. A method of controlling a machine (100) according to any one of claims 5 to 6, **characterized in that** said method comprises an electric propulsion step, in particular during a takeoff and/or ascent phase, according to which the clutches are brought to the following configuration:
- the first clutch (E123) is disengaged to release the thermal engine (1) from the propeller (3);
- the fourth clutch (E14) and the second clutch (E23) are preferably disengaged;
- the third clutch (E324) is engaged to transmit the movement from the electric motor (2) to the propeller (3).

10. The method of controlling a machine (100) according to any one of claims 1 to 8, wherein said control method comprises a thermal control step without using the electric actuator assembly, for example when a failure occurs on the electric transmission chain, according to which the clutches are brought to the following configuration:
- the first clutch (E123) is engaged;
- the second clutch (E23) is engaged to transmit the movement of the thermal engine (1) to the propeller (3).

11. The method of controlling a machine (100) according to any one of claims 5 to 6, wherein said control method comprises a propulsion step by cumulative use of the thermal engine (1) and the electric motor (2), according to which the clutches are brought to the following configuration:
- the first clutch (E123) is engaged;
- the second clutch (E23) is engaged to transmit the movement of the thermal engine (1) to the propeller (3);
- the third clutch (E324) is engaged to transmit the movement from the electric motor (2) to the propeller (3);
- the fourth clutch (E14) is disengaged.

12. The method of controlling a machine (100) according to claim 5 or 6, wherein the control method comprises a step for recharging the battery (40) using the thermal engine (1) while preserving a driving in rotation of the propeller (3), for example for recharging while the machine is in flight, according to which the clutches are brought to the following configuration:
the first clutch (E123), the fourth clutch (E14) and the second clutch (E23) are engaged, so that the thermal engine (1) drives the intermediate shaft (A2) to cause the rotor (202) to turn relative to the stator (201) in order to generate a current, while driving the propeller shaft (A3),
and in that the electric management system (41, 42) controls the current produced by the electric motor (2) functioning as a generator so as to recharge the battery (40).

13. The method of controlling a machine (100) according to claim 5 or 6, wherein said control method comprises a step for recovering energy by wind or tidal effect, according to which the clutches are brought to the following configuration:
- at least one selected from the first clutch (E123) and the fourth clutch (E14) is disengaged to uncouple the propeller (3) from the thermal engine (1) or to uncouple the rotor (202) from the thermal engine (1);
- preferably, the second clutch (E23) is disengaged;
- the third clutch (E324) is engaged to transmit the movement of the propeller (3) to the rotor (202) of the electric motor (2).

14. The method of controlling a machine (100) according to claim 5 or 6, wherein said control method comprises a step for recharging the battery (40) using the thermal engine (1) without driving the propeller (3), according to which the clutches are brought to the following configuration:
- the third clutch (E324) and the second clutch (E23) are disengaged,
- the first clutch (E123) and the fourth clutch (E14) are engaged,
so that the thermal engine (1) drives the intermediate shaft (A2) in order to rotate the rotor (202) so as to generate a current,
and in that the electric management system (41, 42) controls the current produced by the electric motor (2) functioning as a generator to recharge the battery (40).

15. The control method according to any one of claims 9 to 14, for controlling a machine (100) according to any one of claims 1 to 8, wherein, the machine comprising wheels provided with an electric actuator assembly connected to the battery (40) of the machine via an electric management system (41, 42), the method comprises supplying power from the battery (40) to the electric actuator assembly of the wheels.
